# Europäisches Patentamt
# European Patent Office
# Office européen des brevets

(19)

(11) Publication number: **0 232 621**
B1

(12)

# EUROPEAN PATENT SPECIFICATION

(45) Date of publication of the patent specification:
23.05.90

(21) Application number: 86310131.7

(22) Date of filing: 24.12.86

(51) Int. Cl.⁵: **B01J 35/04**, B01J 35/10, B01J 21/14

(54) Catalyst carrier of cordierite honeycomb structure and method of producing the same.

(30) Priority: 27.12.85 JP 293691/85
27.12.85 JP 293692/85
05.08.86 JP 182824/86
05.08.86 JP 183904/86

(43) Date of publication of application:
19.08.87 Bulletin 87/34

(45) Publication of the grant of the patent:
23.05.90 Bulletin 90/21

(84) Designated Contracting States:
BE DE FR GB SE

(56) References cited:
FR-A- 2 306 956
US-A- 4 421 699
US-A- 4 476 236

AMERICAN CERAMIC SOCIETY BULLETIN, vol. 60, no. 2, 1981, pages 202-205, American Ceramic Society, Columbus, Ohio, US; I.M. LACHMAN et al.: "Thermal expansion of extruded cordierite ceramics"
CHEMICAL ABSTRACTS, vol. 92, no. 6, 11th February 1980, page 267, abstracts no. 46224d, Columbus, Ohio, US

(73) Proprietor: NGK INSULATORS, LTD., 2-56, Suda-cho, Mizuho-ku, Nagoya-shi, Aichi 467(JP)

(72) Inventor: Hamanaka, Toshiyuki,
429-50 Minamiwakamatsu-cho, Suzuka City Mie Pref.(JP)
Inventor: Watanabe, Keiichiro, 4E Corp. Nakanomachi 22-31 Sakae 1-chome Naka-Ku, Nagoya City Aichi Pref.(JP)
Inventor: Harada, Takashi, 9 Takeda-Cho 3-Chome Mizuho-Ku, Nagoya City Aichi Pref.(JP)
Inventor: Asami, Seiichi, 1-110 Aza-Kamitokosafu Motojyuku-cho, Okazaki City Aichi Pref.(JP)

(74) Representative: Paget, Hugh Charles Edward et al, MEWBURN ELLIS & CO. 2/3 Cursitor Street, London EC4A 1BQ(GB)

## Description

The present invention relates to a catalyst carrier of cordierite honeycomb structure, particularly to a catalyst carrier of high strength and low thermal expansion honeycomb structure to be used for carrying a catalyst for purifying exhaust gases from automobiles, and to a method of producing the carrier.

Recently, thermal shock resistant and porous cordierite honeycomb ceramics have become of interest, especially as materials for catalyst carriers of honeycomb structure used in devices for purifying hydrocarbons, carbon monoxide and nitrogen oxides in various exhaust gases. Especially, devices for purifying exhaust gases from automobiles are prevailingly used, nowadays. Catalyst carriers used in such purifying devices for exhaust gases from automobile engines are requested to have several important characteristic properties. One such property is so-called "thermal shock resistance" which is a property of avoiding crack or breakage caused by a thermal stress exerted by temperature differences. The temperature differences are formed in a honeycomb structure by temperature change due to rapid heat generation by catalytic oxidation reactions of unburnt hydrocarbons, carbon monoxide, etc. in an exhaust gas. The thermal shock resistance is expressed by a temperature difference of the honeycomb structure over which it withstands a rapid heating and a rapid cooling, and this temperature difference is known to be inversely proportional to the coefficient of thermal expansion, among various properties of the honeycomb structure. Thermal shock resistance becomes larger when the coefficient of thermal expansion (to be referred to as "CTE", hereinafter) becomes smaller.

Another property required of catalyst carriers of ceramic honeycomb structure is good adherence of catalyst active substances and catalyst substances to the catalyst carriers.

A further important property demanded of catalyst carriers of ceramic honeycomb structure is initial activity, i.e. initial activity of the catalyst at the incipient period of using the catalyst of honeycomb structure.

Low expansion cordierite ceramics is known. For instance, US-A 3 885 977 discloses an oriented cordierite ceramics of CTE of less than $11 \times 10^{-7}(1/°C)$ in at least one direction in a temperature range of 25-1,000°C describes a planar orientation given to platelets during processing of stacked clay, which can be platelet clay such as kaoline, etc. as a cause of such orientation.

In addition, US-A 4 280 845 discloses use of a magnesia source material such as talc, etc. of a limited coarse particle size range of 10-50 μm to obtain an extremely low thermal expansion cordierite ceramics.

Meanwhile, with recent extensive improvement in the technique of applying catalysts on carriers of honeycomb structure, the desire for large porosity which was strongly demanded of the catalyst carriers of honeycomb structure has decreased. On the other hand, the following: reduction of volume of the catalyst carriers, improvement of the catalyst property, improvement of initial activity and reduction of fuel consumption rate; reduction of pressure loss for increasing engine power; improvement of strength for reducing cost of canning the honeycomb structure in a casing; and improvements of strength and thermal shock resistance from the necessity of arranging the catalystequipped devices for purifying exhaust gases as near to the automobile engines as possible for enhancing the catalyst activity; have all been sought.

To satisfy these demands on the catalyst carriers of honeycomb structure, thinning of the partition walls of the cells of the honeycomb structure and increase of cell number per unit crosssectional area of the honeycomb structure for improving the catalyst properties, or thinning of the partition walls and decrease of cells number per unit area for decreasing pressure loss, have been studied. However, the thinning of the partition walls and the increase of cell number lead to a drawback of decreasing the strength of the porous cordierite ceramics of honeycomb structure, and a drawback of largely increasing the CTE of the cordierite honeycomb structure, because of a necessity of using far finer particles as raw materials, particularly magnesia source material, caused by decrease of width of slits of an extruding die which extrudes the raw materials into a honeycomb structure.

Besides, densification of cordierite ceramics is rather difficult. Especially, for producing low thermal expansion cordierite ceramics of CTE of $2.0 \times 10^{-6}/°C$ or less in a temperature range of from room temperature to 800°C, batch compositions of raw materials have to be used wherein the amount of impurities such as alkali (calcia, potassium, sodium) and the like which function as fluxes in firing the batch is limited to a very minor amount, so that cordierite honeycomb structures obtained by firing the batch composition have very small amounts of glass phases and hence are very porous and not dense. Particularly, cordierite honeycomb structures recently used as carriers of catalysts for purifying exhaust gases from automobiles require CTE of not over than $1.5 \times 10^{-6}/°C$ in a temperature range of room temperature to 800°C, so that raw materials such as talc, kaolin, alumina, etc. of low impurities are predominantly used, and hence the fired cordierite honeycomb bodies have open porosities as low as possible in the range of about 25-45%, even if production districts, types and particle sizes of the raw materials are selected cautiously. Especially, for producing honeycomb structures of porosities of not over than 30%, amounts of the impurities and minimization of particle sizes of the raw materials are unavoidable, so that product honeycomb structures of CTE of $1.0 \times 10^{-6}/°C$ or less in a temperature range of from room temperature to 800°C have not been obtained.

Moreover, when producing cordierite honeycomb structures of relatively small porosity, molded honeycomb structures have so large shrinkage in the drying step and the firing step of the production proc-

2

ess that they are liable to suffer from cracks, and honeycomb structures of large sizes have been difficult to produce at high production yields.

For the technical reasons as described above, catalyst carriers of very low thermal expansion cordierite honeycomb structures and low porosity and still of sufficiently high strength properties, are still much sought after.

Attention is drawn to EP-A 227 482 (Application No. 86 310 130.9) also filed on 24 December 1986 relating to cordierite honeycomb ceramics used as heat-exchanging elements.

It is an object of the present invention to provide cordierite honeycomb structures of good properties of very low thermal expansion, thin wall, large number of cells, and high strength.

If fine talc is used as a raw material for batches of raw materials for producing honeycomb structures, the produced honeycomb structures have a drawback of extremely large CTE, as described in the aforementioned US-A 4 280 845.

The inventors have dared to use, among the fine talc particles which have the drawback as mentioned above, especially fine talc particles of an average particles diameter of 7 μm or less, preferably 5 μm or less, and have found out that increase of CTE caused by the use of the very fine talc particles can be avoided by use additionally of very fine kaolin particles of an average particles diameter of 2 μm or less, preferably 1 μm or less. This finding has lead to the present invention. Use of such fine particles together has previously been thought disadvantageous.

The fine raw materials including very fine talc and kaoline can further include fine alumina and/or aluminum hydroxide of an average particle diameter of 2 μm or less and/or highly pure amorphous silica.

The inventors have found also that the co-use of the very fine raw materials can decrease the porosity of the produced cordierite honeycomb structures to 30% or less, and exhibit a high strength which can assuredly withstand practical use of the produced cordierite honeycomb structures, even when the partition walls of the cells of the honeycomb structures are produced thinly.

The inventors have further found that use of kaolin of average particle diameter of one-third (1/3) or less of the average particle diameter of talc, is preferable.

The inventors have also found that the difference is very small between CTE in the direction perpendicular to the flow passages (to be referred to as "axis B", hereinafter) of the honeycomb structure, which CTE in axis B has great contribution to the thermal shock resistant property of the honeycomb structure, and CTE in the direction of flow passages (to be referred to as "axis A", hereinafter) of the honeycomb structure, which CTE in axis A has the most low thermal property due to orientations of cordierite crystals.

Conventional cordierite honeycomb structures using coarse particles of the raw materials have confused orientations of the raw materials such as talc, kaolin, etc. in the cross-sections of the walls of the honeycomb structures when the honeycomb structures are formed by extrusion from the extrusion dies, so that CTE in axis B have showed large values of CTE difference of exceeding $0.2 \times 10^{-6}/°C$ in a temperatures range of 40-800°C as compared with CTE in axis A.

Now, the inventors have found that the honeycomb structures are adversely influenced only to a small extent by thermal expansion in the cross-sections of the partition walls of the honeycomb structures by virtue of the use of the very fine particles of the raw materials, and the thermal expansion in axis B of the honeycomb structures can be decreased extensively which is very important in improving the thermal shock resistance of the honeycomb structures.

The present invention is a catalyst carrier of cordierite honeycomb structure of high strength and low thermal expansion, which has a chemical composition on weight basis of 42-56% of $SiO_2$, 30-45% of $Al_2O_3$ and 12-16% of MgO as main components, crystal phases consisting mainly of cordierite, a porosity of 30% or less, preferably 25% or less, CTE of $0.8 \times 10^{-6}/°C$ or less in axis A in the temperature range of 40-800°C, and a CTE of $1.0 \times 10^{-6}/°C$ or less in axis B in the temperature range of 40-800°C.

In an embodiment of the present invention, the honeycomb structure has a partition wall thickness of 203 μm or less.

The present invention is also a method of producing a catalyst carrier or cordierite honeycomb structure, comprising preparing a batch of very fine talc of an average particle diameter of 7 μm or less, very fine kaolin in which the average particle diameter is not more than 2 μm and is 1/3 or less of the average particle diameter of the talc, and other raw materials (not including further talc or further kaolin) for producing a cordierite honeycomb structure of a chemical composition on weight basis of 42-56% of $SiO_2$, 30-45% of $Al_2O_3$ and 12-16% of MgO as main components, adding an organic binder and a plasticizer to the batch, kneading the batch to plasticize it for extrusion, extruding the mixture to form a honeycomb structure, drying the extruded honeycomb structure, and firing the honeycomb structure at a temperature of 1,350-1,440°C, whereby a catalyst carrier of cordierite honeycomb structure as defined above is produced.

In producing the cordierite honeycomb structures of the present invention, the raw materials can include alumina and/or aluminum hydroxide of an average particle diameter of 2 μm or less and/or highly pure amorphous silica. The amount of such silica is preferably 8% or less.

The honeycomb structure of the present invention has a chemical composition in weight basis of 42-65%, preferably 47-53% of $SiO_2$, 30-45%, preferably 32-38% of $Al_2O_3$, and 12-16%, preferably 12.5-15% of MgO, which is in a region extending around the theoretical composition point of cordierite

EP 0 232 621 B1

(2MgO•2Al₂O₃•5SiO₂) known heretofore as a composition of low thermal expansion cordierite ceramics, and can achieve the purposes of a porosity of 30% or less, CTE of $0.8 \times 10^{-6}/°C$ or less in axis A in the temperature range of 40-800°C, and CTE of $1 \times 10^{-6}/°C$ or less in axis B in the same temperature range, by varying various conditions for producing the cordierite honeycomb structure.

Chemical components other than the main components are liable to have adverse influences on the thermal expansion property of the cordierite honeycomb structures, so that the impurities such as $TiO_2$, $CaO$, $K_2O$, $Na_2O$, $Fe_2O_3$, $P_2O_5$, etc. are desirably suppressed to an amount of 2.5% or less. Particularly, the smaller is the amount of alkali components such as $CaO$, $K_2$ and $Na_2O$, the better the thermal expansion property of the honeycomb structures. The amount of $P_2O_5$ should be substantially zero or less than 0.1%.

The crystal phases preferably consist substantially of cordierite crystal phase, the amount of the cordierite crystals being at least 90 wt%, and the amounts of mullite and spinel (inclusive of sapphirine) as other crystals contained are preferaly respectively 2.5 wt% at the maximum. The fine talc particles preferably have small impurities of alkali content, and are preferably produced by a pulverizing or crushing means such as Raymond mill, etc., and not by a grinding means such as a a ball mill, etc., which destroys the shape of the talc particles. The talc particles of diameters exceeding 7 μm cause the difference of the two CTE in axes A and B and the porosity to become large. Also, the fine kaolin particles are preferably of small impurities content, and are preferably those of small variations in crystals shape and not intermingled with large crystals. For example, kaolins having large variations in crystal shape and a tendency of forming secondary particles, such as New Zealand kaolin, etc., are not preferable.

In preparing the raw material kaolin from calcined kaolin, the calcined kaolin is preferably ground in a wet type ball mill, in order to obtain dense honeycomb structures.

If kaolin of particle diameter exceeding 2 μm is used simultaneously with talc particles of diameters of 7 μm or less, the cordierite honeycomb structures produced have increased CTE and porosities.

If the fine raw materials talc of an average particle diameter of 5 μm or less and/or the fine raw material kaolin of an average particle diameter of 1 μm or less and 1/3 or less of the average particle diameter of the talc are used, the porosity can be decreased, while maintaining the low expansion.

The present invention includes use of calcined talc and calcined kaolin which are effective for preventing the formation of cracks in the honeycomb structures caused by shrinkage, etc. during the drying and firing steps, when using the finely divided or pulverized raw materials kaolin and talc. Use of a higher temperature for calcining talc and kaolin incurs increase of porosity and CTE of the resultant honeycomb structures, so that the calcining temperature should preferably be made as low as possible, if calcined talc or kaolin is used. The excellent effects of the present invention cannot be attained, unless the same fine particle sizes are used for calcined talc and kaolin as are used for the raw materials talc and kaolin.

In order to achieve porosity of 30% or less, the other raw materials for cordierite, namely, an alumina source material such as alumina, aluminum hydroxide etc., and a silica source material such as amorphous silica, quartz sand, etc., may be the same as those used conventionally. However, the amount of impurities such as alkali in the chemical composition of the raw materials has to be properly adjusted and particle sizes of the raw materials have to be properly adjusted by excluding or cutting off the coarse particles, depending on thickness of the partition walls of the honeycomb structures to be produced.

When using the fine particles of alumina and/or aluminum hydroxide for achieving a porosity of 25% or less, use of fine particles of a diameter of 2 μm or less contribute to the desired decrease of porosity, and use of alumina of low sodium content ($Na_2O$ of 0.12% or less) affords further advantageous effects of low CTE and low porosity.

Addition of highly pure amorphous silica for achieving low thermal expansion also contributes to decrease of porosity. However, addition in excess of 8% is not preferable, because it deteriorates the catalyst carrier properties.

For producing the cordierite honeycomb structures, an extrusion process used for the production of conventional cordierite honeycomb structures can be applied. In firing, the firing temperature is desirably elevated at an average temperature increase rate of 20-300°C/hr, preferably 30-200°C/hr, in a temperature range of 1100-1350°C to a maximum temperature of 1350-1440°C where it is held for 0.5-24 hrs. If the average temperature increase rate is less than 20°C/hr, CTE becomes large, and if it exceeds 300°C/hr, deformation of the fired product becomes large. If the firing temperature is less than 1350°C, CTE becomes large, and if it exceeds 1440°C, deformation of the fired product becomes large.

Regarding cell structure and strength properties, honeycomb structures particularly for use as catalyst carriers for purifying exhaust gases exited from automobile engines are required usually to have compressive strength in axis A of at least 150-200 kg/cm² for a square cell structure of a cell number of 62 per square centimeters and a partition wall thickness of 152 μm (abbreviated as "152 μm/62 cells/cm²", hereinafter) in order to withstand vibration in operation of automobiles as well as holding pressure of containers holding the catalyst carriers. Now, according to the present invention, porosity can be decreased to 30% or less without increasing CTE of the cordierite honeycomb structures, so that high level of compression strength in axis A of indeed 300 kg/cm² or more at 152 μm/62 cells/cm² can be realized.

In addition, honeycomb structures of a cell structure of 152 μm/47 cells/cm² which in the past were so

4

weak in strength that practical use thereof was impossible, and a cell structure of a cell number of 93 per $cm^2$ and a wall thickness of 102 μm (abbreviated as "102 μm/93 cells/$cm^2$") which in the past could not be used in practice from the both view points of strength and CTE, exhibit considerably level of compression strength in axis A of 200 kg/$cm^2$ or more, so that it has become possible to design various cell structures depending on shape of the catalyst carrier and condition of places at which the catalyst carriers are to be arranged. That is, the improvement of the strength of the honeycomb structures brought by the present invention can exhibit superior effects in thermal shock resistant property and catalyst properties as compared with conventional ones. Thus the present invention can be applied avantageously to honeycomb structures of thinner partition walls and a higher number of cells, i.e., highly densified cells. Reduced pressure loss as compared with conventional structures can be achieved by applying the present invention to honeycomb structures of thin wall and low number of cells.

In contrast to the previously used honeycomb structures of a partition wall thickness of 300 μm and a cell number of 47 per $cm^2$, the present invention can provide honeycomb structures of a partition wall thickness of 102 μm and a cell number of 93 $cm^2$, so that catalyst activity can be extensively improved owing to the cell structure of high density of cell number per unit area as well as thermal shock resistant property. Hence, cordierite honeycomb structures which are suited well as catalyst carriers for purifying exhaust gas from automobile engines can be realized for mounting on manifolds, etc., near automobile engines.

Similarly, as compared with a honeycomb structure of conventional 300 μm/47 cells/$cm^2$, the honeycomb structure of 152 μm/62 cells/$cm^2$ is much improved in compression strength in axis A, so that canning of the honeycomb structure in a casing can be simplified and honeycomb structures suited well to the mounting at manifolds, etc., near automobile engines of violent vibration can be realized.

In addition, honeycomb structures of 152 μm/47 cells/$cm^2$ of CTE and compression strength in axis A which is at the same level as those of honeycomb structures of 300 μm/47 cells/$cm^2$ can be obtained, so that honeycomb structures can be realized which can improve engine power due to decrease of pressure loss of exhaust gases from automobile engines. This can decrease the fuel consumption rate.

The low CTE in axis B of the honeycomb structures according to the present invention is advantageous, particularly when increasing highly the cell number per unit area to improve the catalyst carriers properties.

The honeycomb structures of the present invention provide an advantages that they may be composed of cell structure of considerably thinner partition walls thickness as compared with conventional honeycomb structures of partition wall thickness of 203 μm or less. That is, the present invention is suitable for honeycomb structures of thin walls and relatively small number of cells per unit area. Meanwhile, the present invention can also be applied widely to honeycomb structures of large partition wall thickness and a small number of cells per unit area, by virtue of achieved high strength.

For a better understanding of the present invention, reference is made to the accompanying drawings, in which:

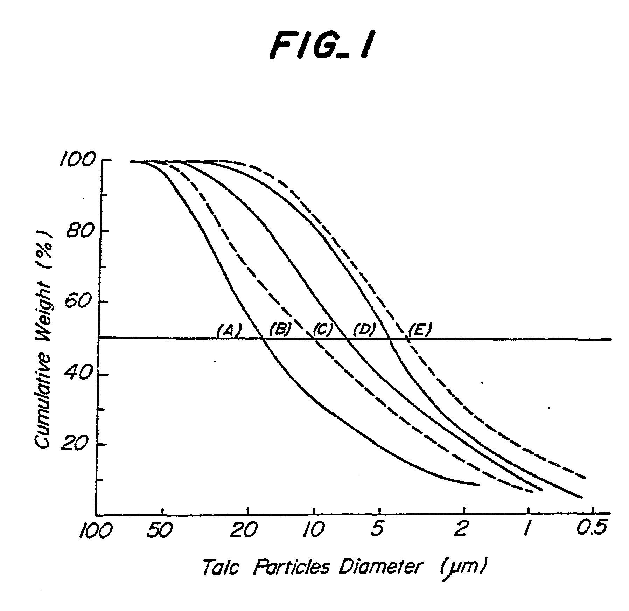

Fig. 1 is a graph showing particle size distributions of a fine talc used in the method of the present invention;

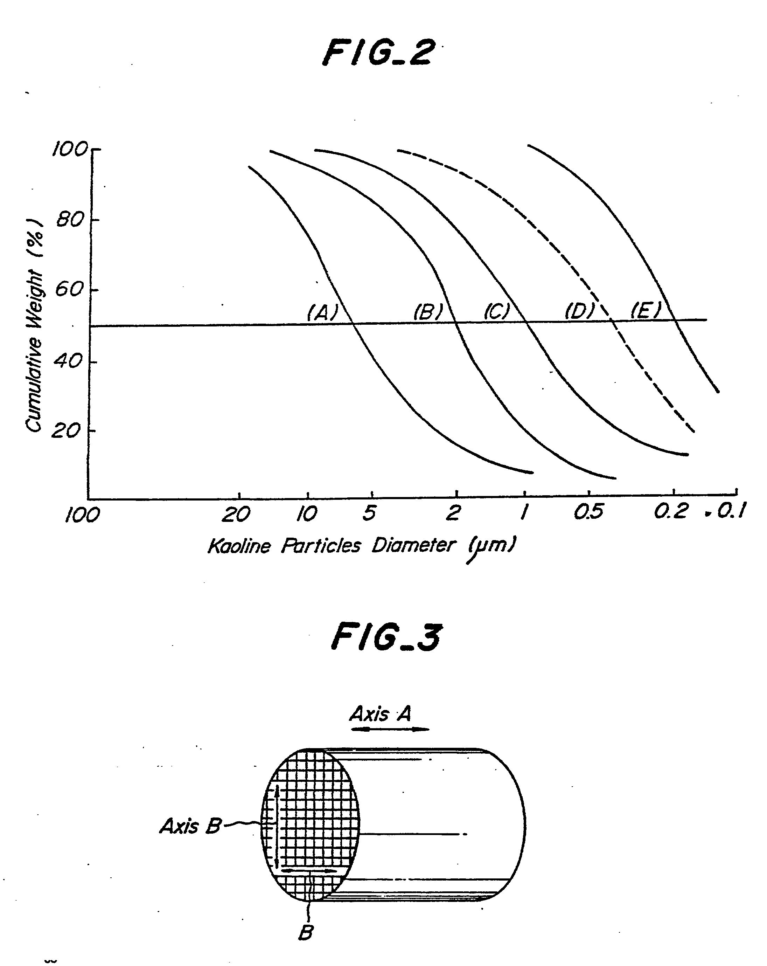

Fig. 2 is a graph showing particle size distribution of a fine kaolin used in the method of the present invention;

Fig. 3 is a schematic perspective view showing a honeycomb structure of the present invention; and

Fig. 4 is a graph showing relations between porosity, partition wall thickness and cell number of the honeycomb structures of the present invention

Hereinafter, the present invention will be explained in more detail with reference to Examples.

<u>Example 1</u>

Raw materials of chemical compositions and particle sizes as shown in the following Table 1 are mixed as shown in Table 2 to prepare batches of Nos. 1-32 of Table 2. 100 parts by weight of each batch is mixed with 3.8 parts by weight of methylcellulose and a suitable amount of water to produce mixtures capable of being blended and extruded. The used raw materials are preliminarily passed through a sieve of 63 μm. Then, the mixtures are blended.

Thereafter, each mixture of the respective batch is formed by a known extrusion means into a cylindrical honeycomb structure of a diameter of 93 mm and a height of 100 mm having a square cell structure, a partition wall thickness of 102 μm, and a cell number of 93 per $cm^2$. Each honeycomb structure is dried, and fired at a firing condition as shown in Table 2 to obtain sintered honeycomb structure bodies. The sintered bodies are evaluated in respect of CTE in axis A in a temperature range of 40-800°C, CTE in axis B in the same temperature range, porosity, amount of cordierite crystals, compression strength in the direction of axis A, and thermal shock resistance. The results of the evaluation are also shown in Table 2. All the sintered bodies have chemical compositions of $P_2O_5$ content of less than 0.1%.

Particle size distributions and average particle diameter of the raw materials are those based on the principle of X-ray sedimentation method, and measured by Sedigraph (Trade name) of Micromeritics Co.

Table 1(a)

| | Average particle diameter (μm) | Ig.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Talc (A) | 18.0 | 5.8 | 61.2 | 0.9 | 30.9 | — | 0.8 | 0.3 |
| Talc (B) | 10.5 | 5.7 | 60.9 | 1.2 | 30.8 | — | 0.9 | 0.3 |
| Talc (C) | 7.0 | 5.6 | 61.3 | 0.9 | 30.9 | — | 0.9 | 0.3 |
| Talc (D) | 4.5 | 5.7 | 60.8 | 1.3 | 30.8 | — | 1.0 | 0.3 |
| Talc (E) | 3.7 | 5.7 | 61.1 | 1.1 | 30.8 | — | 0.9 | 0.3 |
| Talc (F) | 5.0 | 5.7 | 61.6 | 0.9 | 30.5 | — | 0.8 | 0.3 |
| Calcined talc[*1] | 4.5 | 0.1 | 64.4 | 1.4 | 32.6 | — | 1.0 | 0.3 |
| Kaolin (A) | 5.9 | 13.9 | 45.6 | 38.7 | — | 0.8 | 0.3 | 0.2 |
| Kaolin (B) | 2.0 | 13.9 | 45.7 | 38.8 | — | 0.9 | 0.3 | 0.2 |
| Kaolin (C) | 1.0 | 13.9 | 45.5 | 38.6 | — | 1.0 | 0.4 | 0.2 |
| Kaolin (D) | 0.4 | 13.9 | 45.5 | 38.6 | — | 0.8 | 0.4 | 0.2 |
| Kaolin (E) | 0.2 | 13.9 | 45.2 | 37.9 | — | 1.4 | 0.8 | 0.2 |

[*1] Prepared by firing talc (D) at 1000°C for 2 hours

Table 1(b)

| | Average particle diameter (μm) | Ig.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Calcined kaolin (A)[*2] | 1.0 | 0.1 | 53.1 | 45.0 | — | 0.9 | 0.4 | 0.2 |
| Calcined kaolin (B)[*3] | 2.0 | 0.1 | 53.1 | 45.1 | — | 0.8 | 0.4 | 0.2 |
| Calcined kaolin (C)[*4] | 5.9 | 0.1 | 53.2 | 45.0 | — | 0.8 | 0.4 | 0.2 |
| Alumina | 4.0 | 0.2 | — | 99.2 | — | — | — | 0.3 |
| Aluminum hydroxide | 1.2 | 33.7 | — | 64.5 | — | — | — | 0.3 |
| Silica | 9.1 | 0.3 | 99.4 | 0.1 | — | — | 0.1 | — |

[*2] Prepared by firing kaolin (C) at 1000°C for 4 hours
[*3] Prepared by firing kaolin (B) at 1000°C for 4 hours
[*4] Prepared by firing kaolin (A) at 1000°C for 4 hours

Table 2(a)-1

| Test No. | Batch composition (wt%) | | | | | | | Ratio of average particle size (kaolin/talc) | Firing | | |
|---|---|---|---|---|---|---|---|---|---|---|---|
| | Talc (average particle size μm) | Calcined talc | Kaolin (average particle size μm) | Calcined kaolin (average particle size μm) | Alumina | Aluminum hydroxide | Silica | | Temperature raising rate *1 (°C/hr) | Maximum temperature (°C) | Holding time (hr) |
| 1 | 41.0 (18) | — | 25.0 (0.4) | 20.5 (1.0) | 13.5 | — | — | 1/27 | 60 | 1420 | 4 |
| 2 | 41.0 (10.5) | — | 25.0 (0.4) | 20.5 (1.0) | 13.5 | — | — | 1/16 | 60 | 1420 | 4 |
| 3 | 41.0 (7.0) | — | 25.0 (0.4) | 20.5 (1.0) | 13.5 | — | — | 1/10 | 60 | 1420 | 4 |
| 4 | 41.0 (4.5) | — | 25.0 (0.4) | 20.5 (1.0) | 13.5 | — | — | 1/6.7 | 60 | 1420 | 4 |
| 5 | 41.0 (3.7) | — | 25.0 (0.4) | 20.5 (1.0) | 13.5 | — | — | 1/5.5 | 60 | 1420 | 4 |
| 6 | 41.0 (4.5) | — | 25.0 (0.2) | 20.5 (1.0) | 13.5 | — | — | 1/8.0 | 80 | 1415 | 8 |
| 7 | 41.0 (3.7) | — | 25.0 (0.2) | 20.5 (1.0) | 13.5 | — | — | 1/6.6 | 80 | 1415 | 8 |
| 8 | 41.0 (4.5) | — | 25.0 (5.9) | 20.5 (5.9) | 13.5 | — | — | 1/0.8 | 50 | 1425 | 6 |
| 9 | 41.0 (7.0) | — | 25.0 (2.0) | 20.5 (1.0) | 13.5 | — | — | 1/4.5 | 50 | 1425 | 6 |
| 10 | 41.0 (4.5) | — | 25.0 (1.0) | 20.5 (1.0) | 13.5 | — | — | 1/4.5 | 50 | 1425 | 6 |
| 11 | 39.0 (4.5) | — | 20.0 (5.9) | 15.0 (5.9) | 10.5 | 10.5 | 5.0 | 1/0.8 | 50 | 1425 | 6 |
| 12 | 39.0 (4.5) | — | 20.0 (0.4) | 15.0 (1.0) | 10.5 | 10.5 | 5.0 | 1/6.8 | 50 | 1425 | 6 |
| 13 | 30.5 (3.7) | 10.0 | 21.7 (0.2) | 23.3 (1.0) | 14.5 | — | — | 1/6.3 | 80 | 1410 | 6 |
| 14 | 24.2 (4.5) | 15.0 | 20.8 (5.9) | 25.1 (5.9) | 14.9 | — | — | 1/0.8 | 80 | 1410 | 6 |
| 15 | 24.2 (3.7) | 15.0 | 20.8 (0.2) | 23.1 (1.0) | 14.9 | — | — | 1/6.3 | 80 | 1410 | 6 |
| 16 | 40.5 (3.7) | — | 20.0 (0.2) | 25.8 (1.0) | 13.7 | — | — | 1/5.7 | 30 | 1410 | 6 |
| 17 | 40.5 (3.7) | — | 20.0 (0.2) | 25.8 (1.0) | 13.7 | — | — | 1/5.7 | 80 | 1410 | 6 |
| 18 | 40.5 (3.7) | — | 20.0 (0.2) | 25.8 (1.0) | 13.7 | — | — | 1/5.7 | 120 | 1410 | 6 |
| 19 | 40.5 (4.5) | — | 20.0 (0.4) | 25.8 (1.0) | 13.7 | — | — | 1/6.1 | 60 | 1350 | 24 |
| 20 | 40.5 (4.5) | — | 20.0 (0.4) | 25.8 (1.0) | 13.7 | — | — | 1/6.1 | 60 | 1440 | 0.5 |
| 21 | 40.7 (18) | — | 28.1 (5.9) | 16.7 (5.9) | 14.5 | — | — | 1/3.1 | 60 | 1410 | 6 |
| 22 | — | 39.5 | 28.1 (0.2) | 17.9 (1.0) | 14.5 | — | — | 1/8.8 | 80 | 1410 | 6 |
| 23 | 39.1 (4.5) | — | — | — | 19.1 | 19.2 | 22.6 | — | 50 | 1410 | 6 |
| 24 | 39.3 (4.5) | — | 46.4 (5.9) | — | 14.3 | — | — | 1/0.8 | 50 | 1410 | 6 |
| 25 | 40.7 (5.0) | — | 28.1 (2.0) | 16.7 (1.0) | 14.5 | — | — | 1/3.1 | 65 | 1415 | 6 |

Table 2(a)-2

| Test No. | Batch composition (wt%) | | | | | | | Ratio of average particle size (kaolin/talc) | Firing | | |
|---|---|---|---|---|---|---|---|---|---|---|---|
| | Talc (average particle size μm) | Calcined talc | Kaolin (average particle size μm) | Calcined kaolin (average particle size μm) | Alumina | Aluminum hydroxide | Silica | | Temperature raising rate *1 (°C/hr) | Maximum temperature (°C) | Holding time (hr) |
| 26 | 40.7 (3.7) | – | 28.1 (2.0) | 16.7 (1.0) | 14.5 | – | – | 1/2.3 | 65 | 1415 | 6 |
| 27 | 40.7 (4.5) | – | 28.1 (2.0) | 16.7 (2.0) | 14.5 | – | – | 1/2.3 | 65 | 1415 | 6 |
| 28 | 40.7 (5.0) | – | 28.1 (0.2) | 16.7 (1.0) | 14.5 | – | – | 1/10 | 65 | 1410 | 8 |
| 29 | 40.7 (5.0) | – | 28.1 (1.0) | 16.7 (1.0) | 14.5 | – | – | 1/5.0 | 65 | 1410 | 8 |
| 30 | 40.7 (5.0) | – | 28.1 (0.2) | 16.7 (2.0) | 14.5 | – | – | 1/5.7 | 65 | 1410 | 8 |
| 31 | 40.7 (7.0) | – | 28.1 (0.2) | 16.7 (2.0) | 14.5 | – | – | 1/8.0 | 65 | 1425 | 10 |
| 32 | 40.7 (7.0) | – | 28.1 (2.0) | 16.7 (2.0) | 14.5 | – | – | 1/3.5 | 65 | 1425 | 10 |

*1 Average temperature raising rate in a temperature range of 1100–1350°C

Table 2(b)

| Test No. | Characteristic properties of sintered bodies | | | | | | Remarks |
|---|---|---|---|---|---|---|---|
| | CTE in axis A ($\times 10^{-6}$/°C) | CTE in axis B ($\times 10^{-6}$/°C) | *2 Porosity (%) | *3 Amount of cordierite crystal (wt%) | *4 Compression strength in axis A (kg/cm$^2$) | *5 Thermal shock resistance property (°C) | |
| 1 | 0.4 | 0.9 | 31.0 | 95 | 188 | 750 | Reference |
| 2 | 0.5 | 0.8 | 30.2 | 95 | 197 | 750 | |
| 3 | 0.5 | 0.6 | 29.8 | 94 | 201 | 900 | Present invention |
| 4 | 0.6 | 0.7 | 27.6 | 94 | 253 | 850 | |
| 5 | 0.7 | 0.8 | 26.5 | 94 | 261 | 800 | |
| 6 | 0.4 | 0.5 | 25.4 | 95 | 263 | 950 | |
| 7 | 0.6 | 0.6 | 24.9 | 95 | 295 | 850 | |
| 8 | 1.1 | 1.3 | 31.7 | 91 | 181 | 700 | Reference |
| 9 | 0.8 | 1.0 | 29.8 | 92 | 203 | 750 | Present invention |
| 10 | 0.7 | 0.8 | 27.3 | 93 | 243 | 800 | |
| 11 | 1.2 | 1.5 | 31.2 | 90 | 180 | 650 | Reference |
| 12 | 0.3 | 0.5 | 28.7 | 92 | 233 | 950 | Present invention |
| 13 | 0.5 | 0.6 | 28.7 | 95 | 230 | 900 | |
| 14 | 0.9 | 1.2 | 30.8 | 92 | 195 | 700 | Reference |
| 15 | 0.7 | 0.8 | 28.6 | 95 | 234 | 800 | Present invention |
| 16 | 0.7 | 0.7 | 26.3 | 93 | 272 | 800 | |
| 17 | 0.6 | 0.6 | 28.0 | 93 | 237 | 850 | |
| 18 | 0.4 | 0.5 | 28.3 | 93 | 234 | 950 | |
| 19 | 0.8 | 1.0 | 28.7 | 90 | 230 | 750 | |
| 20 | 0.5 | 0.7 | 25.8 | 91 | 239 | 850 | |
| 21 | 0.6 | 0.9 | 35.8 | 95 | 127 | 750 | Reference |
| 22 | 0.6 | 0.6 | 27.2 | 93 | 238 | 850 | Present invention |
| 23 | 1.1 | 1.4 | 37.4 | 91 | 107 | 650 | Reference |
| 24 | 1.0 | 1.3 | 32.9 | 94 | 145 | 700 | |
| 25 | 0.8 | 1.0 | 29.6 | 94 | 209 | 750 | Present invention |
| 26 | 1.0 | 1.2 | 28.7 | 94 | 232 | 700 | Reference |
| 27 | 0.9 | 1.1 | 29.4 | 94 | 217 | 700 | |
| 28 | 0.5 | 0.6 | 27.3 | 93 | 241 | 900 | Present invention |
| 29 | 0.7 | 0.6 | 27.9 | 95 | 240 | 800 | |
| 30 | 0.6 | 0.6 | 27.6 | 95 | 248 | 850 | |
| 31 | 0.5 | 0.7 | 28.9 | 96 | 223 | 850 | |
| 32 | 0.6 | 0.7 | 29.6 | 96 | 213 | 850 | |

*2 Mercury porosimeter. Calculated on total pores volume (Assumed cordierite true density of 2.52)
*3 X-ray diffraction. Quantitative values on ZnO internal standard
*4 Measured on a specimen of 25.4 mm Φ × 25.4 mml at a cross-head speed of 0.5 mm/min
*5 Durable temperature when held for 30 min and then exposed to room temperature

## Example 2

The batches of Nos. 6 and 21 of Table 2 are extruded respectively from dies of different cell structures in the same manner as in Example 1, and the green honeycomb structures are fired to produce cylindrical honeycomb structures of Nos. 41-47 of a diameter of 93 mm and a height of 100 mm and cell structures as shown in Table 3. Thus produced honeycomb structures are evaluated in respect of CTE in axis A in a temperature range of 40-800°C, CTE in axis B in the same temperature range, and compression strength in axis A. The results of the evaluation are also shown in Table 3.

Table 3

| No. | Example (Table 2, No. 6) | | | | | Reference Example (Table 2, No. 21) | |
|---|---|---|---|---|---|---|---|
| | 41 | 42 | 43 | 44 | 45 | 46 | 47 |
| Cell shape | | | Square | | | Square | |
| Wall thickness ($\mu$m) | 203 | 152 | 127 | 102 | 102 | 152 | 102 |
| Cell density (cells/cm$^2$) | 47 | 62 | 78 | 93 | 190 | 62 | 93 |
| CTE in axis A ($\times 10^{-6}$/°C, 40–800°C) | 0.4 | 0.4 | 0.4 | 0.4 | 0.5 | 0.6 | 0.6 |
| CTE in axis B ($\times 10^{-6}$/°C, 40–800°C) | 0.6 | 0.5 | 0.5 | 0.5 | 0.6 | 0.9 | 0.9 |
| Compression strength in axis A (kg/cm$^2$) | 371 | 358 | 318 | 263 | 287 | 231 | 127 |

As is clearly apparent from the above Tables 2 and 3, the cordierite honeycomb structures of the present invention exhibit superior low expansion and strength as catalyst carriers.

## Example 3

Raw materials of characteristic properties as shown in the following Table 4 are used to prepare batches of Nos. 51-87 of Table 5 based on batch compositions shown in Table 5. 100 parts by weight of the batch composition of the raw materials are mixed and kneaded with 3.8 parts by weight of methylcellulose and a suitable amount of water to form an extrudable blend. The raw materials were all preliminarily treated to pass a sieve of 63 $\mu$m. Then, each blend of the respective batch is formed into a cylindrical honeycomb structure of a diameter of 93 mm and a height of 100 mm having a square cell structure, a cell number of 93 per cm$^2$ and a partition wall thickness of 102 $\mu$m by a known extrusion means. The honeycomb structures of respective batches are dried, and fired at firing conditions shown in Table 5 to sinter the same. The sintered bodies are evaluated in respect of CTE in axis A in 40-800°C, CTE is axis B in 40-800°C, porosity, amount of cordierite crystals, compression strength in the direction of axis A, and thermal shock resistance. The results of the evaluation are also shown in Table 5. All the sintered bodies have chemical compositions of P$_2$O$_5$ content of less than 0.1%.

Particle size distributions and average particle diameters of the raw materials are measured in the same way as in Example 1.

Table 4(a)

| | Average particle diameter ($\mu$m) | lg.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Talc (C) | 7.0 | 5.6 | 61.3 | 0.9 | 30.9 | – | 0.9 | 0.3 |
| Talc (F) | 5.0 | 5.7 | 61.6 | 0.9 | 30.5 | – | 0.8 | 0.3 |
| Talc (D) | 4.5 | 5.7 | 60.8 | 1.3 | 30.8 | – | 1.0 | 0.3 |
| Talc (E) | 3.7 | 5.7 | 61.1 | 1.1 | 30.8 | – | 0.9 | 0.3 |
| Kaolin (C) | 1.0 | 13.9 | 45.5 | 38.6 | – | 1.0 | 0.4 | 0.2 |
| Kaolin (D) | 0.4 | 13.9 | 45.5 | 38.6 | – | 0.8 | 0.4 | 0.2 |
| Kaolin (E) | 0.2 | 13.9 | 45.2 | 37.9 | – | 1.4 | 0.8 | 0.2 |
| Calcined kaolin (B) | 2.0 | 0.1 | 53.1 | 45.1 | – | 0.8 | 0.4 | 0.2 |
| Calcined kaolin (A) | 1.0 | 0.1 | 53.1 | 45.0 | – | 0.9 | 0.4 | 0.2 |
| Calcined kaolin (D)[*1] | 0.8 | 0.1 | 53.1 | 45.1 | – | 0.8 | 0.4 | 0.2 |

[*1] Prepared by firing kaolin (B) of Table 1 at 1000°C for 4 hours, and grinding in a wet type ball mill

Table 4(b)

| | Average particle diameter ($\mu$m) | lg.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Alumina (B)[*2] | 2.0 | 0.3 | – | 99.4 | – | – | – | 0.33 $Na_2O$ |
| Alumina (C)[*3] | 1.7 | 0.2 | – | 99.4 | – | – | – | 0.12 $Na_2O$ |
| Alumina (D)[*3] | 1.0 | 0.2 | – | 99.7 | – | – | – | 0.06 $Na_2O$ |
| Aluminum hydroxide (A) | 3.6 | 34.0 | – | 65.0 | – | – | – | 0.2 |
| Aluminum hydroxide (B) | 2.0 | 33.8 | – | 64.9 | – | – | – | 0.3 |
| Aluminum hydroxide (C) | 1.7 | 33.9 | – | 64.7 | – | – | – | 0.2 |
| Aluminum hydroxide (D) | 1.2 | 33.7 | – | 64.5 | – | – | – | 0.3 |
| Silica (A)[*4] | 9.1 | 0.3 | 99.4 | 0.1 | – | – | – | – |
| Silica (B)[*5] | 9.8 | 0.2 | 99.7 | 0.1 | – | – | – | – |

[*2] Alumina of ordinary sodium content ($Na_2O$ content of 0.33%)
[*3] Alumina of low sodium content ($Na_2O$ content of 0.12% or less)
[*4] Amorphous fused silica
[*5] Crystalline silica (quartz)

Table 5(a)-1

| Test No. | Batch composition (wt%) | | | | | | Ratio of average particle size (kaolin/talc) | Firing | | |
|---|---|---|---|---|---|---|---|---|---|---|
| | Talc (average particle size μm) | Kaolin (average particle size μm) | Calcined kaolin (average particle size μm) | Alumina (average particle size μm) | Aluminum hydroxide (average particle size μm) | Silica (average particle size μm) | | Temperature raising rate (°C/hr) | Maximum temperature (°C) | Holding time (hr) |
| 51 | 40.7 (7.0) | 28.1 (1.0) | 16.7 (2.0) | 14.5 (2.0) | — | — | 1/5.1 | 60 | 1420 | 10 |
| 52 | 40.7 (5.0) | 28.1 (1.0) | 16.7 (2.0) | 14.5 (2.0) | — | — | 1/3.6 | 60 | 1420 | 10 |
| 53 | 40.7 (3.7) | 28.1 (0.2) | 16.7 (1.0) | 14.5 (2.0) | — | — | 1/7.4 | 60 | 1420 | 10 |
| 54 | 40.7 (3.7) | 28.1 (0.2) | 16.7 (0.8) | 14.5 (2.0) | — | — | 1/8.7 | 60 | 1420 | 10 |
| 55 | 40.7 (5.0) | 28.1 (1.0) | 16.7 (1.0) | 14.5 (1.7)*1 | — | — | 1/5.0 | 60 | 1420 | 10 |
| 56 | 40.7 (3.7) | 28.1 (0.4) | 16.7 (1.0) | 14.5 (1.7)*1 | — | — | 1/5.9 | 60 | 1420 | 10 |
| 57 | 40.7 (3.7) | 28.1 (0.2) | 16.7 (0.8) | 14.5 (1.7)*1 | — | — | 1/8.7 | 60 | 1420 | 10 |
| 58 | 40.7 (5.0) | 28.1 (1.0) | 16.7 (1.0) | 14.5 (1.0)*1 | — | — | 1/5.0 | 60 | 1420 | 10 |
| 59 | 40.7 (3.7) | 28.1 (0.2) | 16.7 (1.0) | 14.5 (1.0)*1 | — | — | 1/7.4 | 60 | 1420 | 10 |
| 60 | 40.7 (3.7) | 28.1 (0.2) | 16.7 (0.8) | 14.5 (1.0)*1 | — | — | 1/8.7 | 60 | 1420 | 10 |
| 61 | 41.0 (3.7) | 25.0 (0.2) | 20.5 (0.8) | 13.5 (1.7)*1 | — | — | 1/7.9 | 50 | 1420 | 12 |
| 62 | 41.0 (3.7) | 25.0 (0.2) | 20.5 (0.8) | 13.5 (1.0)*1 | — | — | 1/7.9 | 50 | 1420 | 12 |
| 63 | 39.1 (5.0) | 29.1 (1.0) | 16.0 (1.0) | 9.0 (2.0) | 6.8 (3.6) | — | 1/5.0 | 50 | 1420 | 8 |
| 64 | 39.1 (5.0) | 29.1 (1.0) | 16.0 (1.0) | 9.0 (2.0) | 6.8 (2.0) | — | 1/5.0 | 50 | 1420 | 8 |
| 65 | 39.1 (3.7) | 29.1 (0.4) | 16.0 (0.8) | 9.0 (1.0)*1 | 6.8 (1.7) | — | 1/6.8 | 50 | 1420 | 8 |
| 66 | 37.2 (3.7) | 25.0 (1.0) | 18.4 (1.0) | — | 19.4 (3.6) | — | 1/3.7 | 50 | 1420 | 6 |
| 67 | 37.2 (5.0) | 25.0 (0.4) | 18.4 (1.0) | — | 19.4 (2.0) | — | 1/7.6 | 50 | 1420 | 6 |
| 71 | 39.0 (5.0) | 20.0 (1.0) | 15.0 (1.0) | 10.5 (2.0) | 10.5 (3.6) | 5.0 (9.1) | 1/5.0 | 60 | 1420 | 12 |
| 72 | 39.0 (4.5) | 20.0 (0.4) | 15.0 (1.0) | 10.5 (2.0) | 10.5 (2.0) | 5.0 (9.8)*2 | 1/6.8 | 60 | 1420 | 12 |
| 73 | 39.0 (7.0) | 20.0 (0.4) | 15.0 (2.0) | 10.5 (2.0) | 10.5 (2.0) | 5.0 (9.1) | 1/6.4 | 60 | 1420 | 12 |
| 74 | 39.0 (5.0) | 20.0 (1.0) | 15.0 (2.0) | 10.5 (2.0) | 10.5 (1.7) | 5.0 (9.1) | 1/3.5 | 60 | 1420 | 12 |
| 75 | 39.0 (4.5) | 20.0 (0.4) | 15.0 (1.0) | 10.5 (2.0) | 10.5 (2.0) | 5.0 (9.1) | 1/6.8 | 60 | 1420 | 12 |
| 76 | 39.0 (3.7) | 20.0 (0.2) | 15.0 (1.0) | 10.5 (2.0) | 10.5 (2.0) | 5.0 (9.1) | 1/6.8 | 60 | 1420 | 12 |
| 77 | 39.0 (3.7) | 20.0 (0.2) | 15.0 (0.8) | 10.5 (2.0) | 10.5 (1.2) | 5.0 (9.1) | 1/8.1 | 60 | 1420 | 12 |
| 78 | 39.0 (5.0) | 20.0 (1.0) | 15.0 (2.0) | 10.5 (1.7)*1 | 10.5 (1.7) | 5.0 (9.1) | 1/3.5 | 60 | 1420 | 12 |

*1 Alumina of low sodium content
*2 Crystalline silica

Table 5(a)-2

| Test No. | Batch composition (wt%) | | | | | | Ratio of average particle size (kaolin/talc) | Firing | | |
|---|---|---|---|---|---|---|---|---|---|---|
| | Talc (average particle size μm) | Kaolin (average particle size μm) | Calcined kaolin (average particle size μm) | Alumina (average particle size μm) | Aluminum hydroxide (average particle size μm) | Silica (average particle size μm) | | Temperature raising rate (°C/hr) | Maximum temperature (°C) | Holding time (hr) |
| 79 | 39.0 (4.5) | 20.0 (0.4) | 15.0 (1.0) | 10.5 (1.7)*1 | 10.5 (2.0) | 5.0 (9.1) | 1/6.8 | 60 | 1420 | 12 |
| 80 | 39.0 (3.7) | 20.0 (0.2) | 15.0 (0.8) | 10.5 (1.7)*1 | 10.5 (1.2) | 5.0 (9.1) | 1/8.1 | 60 | 1420 | 12 |
| 81 | 39.0 (5.0) | 20.0 (1.0) | 15.0 (2.0) | 10.5 (1.0)*1 | 10.5 (1.7) | 5.0 (9.1) | 1/3.5 | 60 | 1420 | 10 |
| 82 | 39.0 (4.5) | 20.0 (0.4) | 15.0 (1.0) | 10.5 (1.0)*1 | 10.5 (2.0) | 5.0 (9.1) | 1/6.8 | 60 | 1420 | 10 |
| 83 | 39.0 (3.7) | 20.0 (0.2) | 15.0 (0.8) | 10.5 (1.0)*1 | 10.5 (1.2) | 5.0 (9.1) | 1/8.1 | 60 | 1420 | 10 |
| 85 | 39.0 (4.5) | 17.0 (0.4) | 11.5 (2.0) | 10.5 (1.7)*1 | 14.0 (1.7) | 8.0 (9.1) | 1/4.3 | 70 | 1420 | 8 |
| 86 | 39.0 (4.5) | 20.0 (0.4) | 19.0 (2.0) | 10.5 (1.7)*1 | 8.5 (1.7) | 3.0 (9.1) | 1/3.8 | 70 | 1420 | 8 |
| 87 | 39.0 (4.5) | 23.5 (0.4) | 20.0 (2.0) | 10.5 (1.7)*1 | 6.0 (1.7) | 1.0 (9.1) | 1/4.0 | 70 | 1420 | 8 |

*1 Alumina of low sodium content
*2 Crystalline silica

Table 5(b)

| Test No. | Characteristic properties of sintered bodies | | | | | | Remarks |
|---|---|---|---|---|---|---|---|
| | CTE in axis A ($\times 10^{-6}/°C$) | CTE in axis B ($\times 10^{-6}/°C$) | Porosity (%) | Amount of cordierite crystal (wt%) | Compression strength in axis A (kg/cm$^2$) | Thermal shock resistance property (°C) | |
| 51 | 0.6 | 0.7 | 25.0 | 93 | 307 | 850 | Present invention |
| 52 | 0.7 | 0.8 | 24.7 | 93 | 330 | 800 | |
| 53 | 0.6 | 0.8 | 23.0 | 95 | 389 | 850 | |
| 54 | 0.8 | 0.9 | 19.8 | 92 | 445 | 800 | |
| 55 | 0.7 | 0.8 | 22.7 | 91 | 396 | 800 | |
| 56 | 0.7 | 0.9 | 20.3 | 92 | 441 | 800 | |
| 57 | 0.8 | 0.8 | 18.8 | 94 | 485 | 850 | |
| 58 | 0.8 | 1.0 | 22.0 | 93 | 403 | 750 | |
| 59 | 0.6 | 0.8 | 20.3 | 94 | 432 | 900 | |
| 60 | 0.7 | 0.7 | 18.0 | 92 | 523 | 850 | |
| 61 | 0.7 | 0.7 | 20.9 | 93 | 430 | 850 | |
| 62 | 0.6 | 0.6 | 19.3 | 94 | 474 | 900 | |
| 63 | 0.8 | 1.0 | 26.7 | 95 | 272 | 750 | |
| 64 | 0.7 | 0.8 | 23.0 | 96 | 395 | 800 | |
| 65 | 0.6 | 0.7 | 20.8 | 94 | 425 | 900 | |
| 66 | 0.7 | 0.9 | 27.4 | 95 | 250 | 750 | |
| 67 | 0.6 | 0.8 | 22.9 | 96 | 400 | 850 | |
| 71 | 0.8 | 1.0 | 28.9 | 93 | 235 | 750 | |
| 72 | 0.6 | 0.8 | 28.9 | 92 | 230 | 850 | |
| 73 | 0.3 | 0.6 | 30.0 | 90 | 200 | 900 | |
| 74 | 0.3 | 0.5 | 27.8 | 92 | 240 | 950 | |
| 75 | 0.4 | 0.7 | 25.0 | 91 | 303 | 900 | |
| 76 | 0.4 | 0.7 | 24.6 | 91 | 321 | 900 | |
| 77 | 0.5 | 0.7 | 24.3 | 91 | 338 | 850 | |
| 78 | 0.3 | 0.6 | 27.0 | 91 | 245 | 950 | |
| 79 | 0.4 | 0.7 | 24.7 | 90 | 325 | 900 | |
| 80 | 0.5 | 0.7 | 23.0 | 94 | 392 | 850 | |
| 81 | 0.4 | 0.6 | 25.9 | 91 | 280 | 900 | |
| 82 | 0.5 | 0.8 | 24.3 | 92 | 358 | 850 | |
| 83 | 0.6 | 0.8 | 22.7 | 91 | 401 | 800 | |
| 85 | 0.3 | 0.6 | 29.0 | 92 | 236 | 950 | |
| 86 | 0.5 | 0.7 | 25.7 | 90 | 277 | 850 | |
| 87 | 0.5 | 0.7 | 25.1 | 91 | 296 | 850 | |

As is seen from Table 5, test Nos. 51-62 64, 65 and 67 wherein fine talc and kaolin are mixed with alumina and/or aluminum hydroxide of an average particle diameter of 2 μm or less, and test Nos. 71, 73-87 wherein highly pure amorphous silica is added in an amount of not over than 8%, achieve smaller porosities and lower CTE than Example 1 wherein relatively coarse alumina particles of an average particles diameter of 4 μm are used.

Examples of test Nos. 63, 66 and 71 used aluminum hydroxide of a particle size of 3.6 μm larger than 2.0 μm, and test No. 72 used crystalline silica as a silica source material, so that their porosities are higher than other test Nos. in Table 5. However, these porosities are substantially equal to the porosities of the present honeycomb structures, so that they fall within the scope of the present invention.

# EP 0 232 621 B1

## Example 4

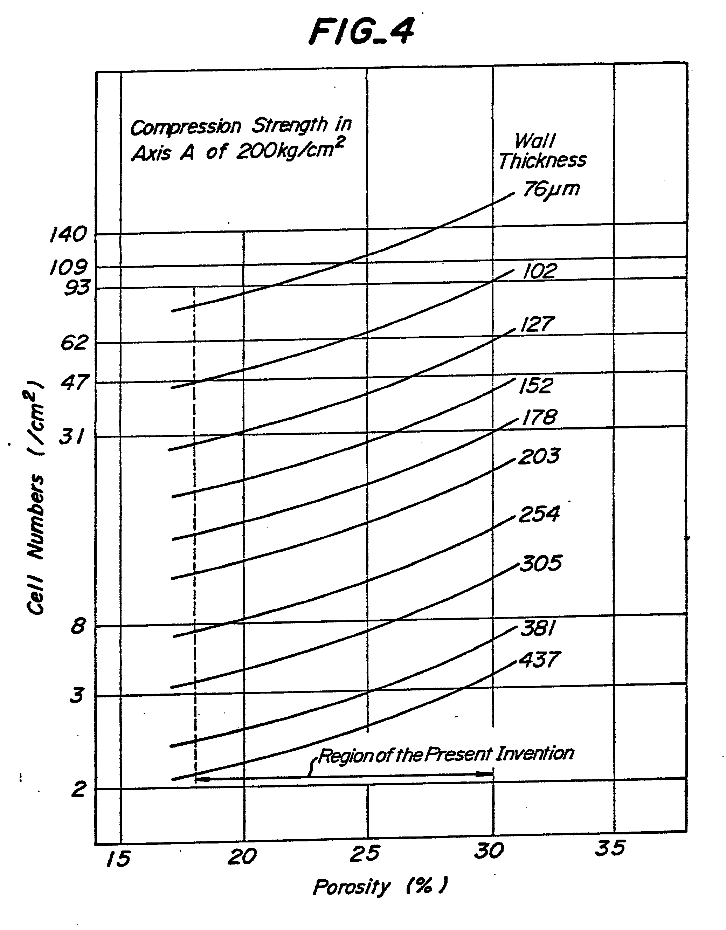

Batches of test Nos. 60 (porosity 18.0%), 56 (porosity 20.3%), 53 (porosity 23.0%), 51 (porosity 25.0%), 78 (porosity 27.0%) and 73 (porosity 30.0%) are respectively formed into honeycomb structures by extrusion from dies of different cell structures in the same manner as in Example 3, and the extrudates are dried and fired to produce cylindrical honeycomb structures of diameter of 93 mm and a height of 100 mm having cell structures as shown in the following Table 6. Respective honeycomb structures are measured on compression strength in axis A. From the measurements, points corresponding to compression strength in axis A of 200±10 kg/cm² are plotted, and interrelations between porosity, partition wall thickness and cell number per unit area, are shown in the attached Fig. 4.

Table 6

| Cell number (/cm²)<br>Wall thickness (μm) | 140 | 109 | 93 | 62 | 47 | 31 | 16 | 8 | 3 |
|---|---|---|---|---|---|---|---|---|---|
| 76 | O | O | O | O | – | – | – | – | – |
| 102 | O | O | O | O | O | – | – | – | – |
| 127 | – | O | O | O | O | O | – | – | – |
| 152 | – | – | O | O | O | O | – | – | – |
| 178 | – | – | O | O | O | O | O | – | – |
| 203 | – | – | O | O | O | O | O | – | – |
| 254 | – | – | – | O | O | O | O | O | – |
| 305 | – | – | – | O | O | O | O | O | – |
| 381 | – | – | – | – | O | O | O | O | O |
| 437 | – | – | – | – | O | O | O | O | O |

From Table 6 and Fig. 4, it becomes clear that, when calculated a partition wall thickness at the time of the compression strength in axis A of the honeycomb structure of 200 kg/cm² from the porosities which are included in the scope of the present invention, the partition wall thickness can be defined as 437 μm or less in a range of cell density of 2-140 cells/cm².

As described in detail in the foregoings, the present invention can provide honeycomb structures of low expansion, porosities of 30% of less, high strengths and thin partition walls with high or low cell densities. These honeycomb structures can be used advantageously in a broader range as catalyst carriers of honeycomb structures, particularly catalyst carriers for purifying exhaust gases from automobile engines.

## Claims

1. A catalyst carrier of cordierite honeycomb structure which as a chemical composition in weight basis of 42-56% of $SiO_2$, 30-45% of $Al_2O_3$ and 12-16% of $MgO$ as main components, crystalline phases consisting mainly of cordierite, a porosity not exceeding 30%, coefficient of thermal expansion (CTE) not exceeding $1.0 \times 10^{-6}/°C$ in the direction perpendicular to the flow passages of the honeycomb structure (axis B) in the temperature rang of 40-800°C, CTE not exceeding $0.8 \times 10^{-2}/°C$ in the direction of the flow passages of the honeycomb structure (axis A) in the same temperature range.

2. A catalyst carrier of cordierite honeycomb structure as defined in claim 1, which has a porosity not exceeding 25%.

3. A catalyst carrier of cordierite honeycomb structure as defined in claim 1 or claim 2, which has a difference of CTE not exceeding $0.2 \times 10^{-6}/°C$ between CTE in axis B and CTE in axis A.

4. A catalyst carrier of cordierite honeycomb structure as defined in any one of claims 1 to 3, which has a compressive strength in axis A of not less than 200 kg/cm².

5. A catalyst carrier of cordierite honeycomb structure as defined in any one of claims 1 to 4, which has a partition wall thickness not exceeding 437 μm.

6. A method of producing a catalyst carrier of cordierite honeycomb structure as defined in claim 1, comprising preparing a batch of very fine talc of an average particle diameter not exceeding 7 μm, very fine kaolin of an average particle diameter of not exceeding 2 μm and not exceeding 1/3 of the average particle diameter of the talc, and other raw materials for producing the cordierite, adding an organic binder and a plasticizer to the batch, kneading the batch to plasticize it for extrusion, extruding the mixture to form a honeycomb structure, drying the extruded honeycomb structure, and firing the honeycomb structure at a temperature of 1350-1440°C.

7. A method as defined in claim 6, wherein the talc has an average particle diameter not exceeding 5 µm.

8. A method as defined in claim 6 or claim 7, wherein the kaolin has an average particle diameter not exceeding 1 µm.

9. A method as defined in any one of claims 6 to 8, wherein at least one of alumina and aluminum hydroxide of an average particle diameter not exceeding 2 µm is included in the batch.

10. A method as defined in claim 9, wherein the raw material alumina has a Na₂O content not exceeding 0.12%.

11. A method as defined in any one of claims 6 to 10 wherein the kaolin is prepared by grinding calcined kaolin in a wet type ball mill.

12. A method as defined in any one of claims 6 to 11 wherein highly pure amorphous silica is inlcuded to the batch.

13. A method as defined in claim 12, wherein the highly pure amorphous silica is added to the batch in an amount not exceeding 8%.

**Patentansprüche**

1. Katalysatorträger mit Cordierit-Honigwabenstruktur, der eine chemische Zusammensetzung von 42–56 Gew.-% SiO₂, 30–45 Gew.-% Al₂O₃ und 12–16 Gew.-% MgO als Hauptbestandteile hat, wobei die kristallinen Fasern hauptsächlich aus Cordierit bestehen, wobei die Porösität 30% nicht übersteigt, wobei der Wärmeausdehnungskoeffizient (CTE) in einer Richtung rechtwinklig zu den Strömungskanälen der Honigwabenstruktur (Achse B) im Temperaturbereich von 40–800°C nicht grösser ist als $1,0 \times 10^{-6}$/°C, wobei der Wärmeausdehnungskoeffizient in Richtung der Strömungskanäle der Honigwabenstruktur (Achse A) im gleichen Temperaturbereich nicht grösser ist als $0,8 \times 10^{-6}$/°C.

2. Katalysatorträger mit Cordierit-Honigwabenstruktur nach Anspruch 1, dessen Porösität 25% nicht übersteigt.

3. Katalysatorträger mit Cordierit-Honigwabenstruktur nach Anspruch 1 oder 2, bei dem der Unterschied zwischen dem Wärmeausdehnungskoeffizient in der Achse B und dem Wärmeausdehnungskoeffizient in der Achse A nicht grösser ist als $0,2 \times 10^{-6}$/°C.

4. Katalysatorträger mit Cordierit-Honigwabenstruktur nach einem der Ansprüche 1 bis 3, dessen Druckfestigkeit in der Achse A nicht kleiner ist als 200 kg/cm².

5. Katalysatorträger mit Cordierit-Honigwabenstruktur nach einem der Ansprüche 1 bis 4, dessen Trennwanddicke 437 µm nicht übersteigt.

6. Verfahren zur Herstellung eines Katalysatorträgers mit Cordierit-Honigwabenstruktur nach Anspruch 1, umfassend:
Zubereiten einer Masse aus sehr feinem Talkum mit einem mittleren Teilchendurchmesser von nicht mehr als 7 µm, sehr feinem Kaolin mit einem mittleren Teilchendurchmesser von nicht mehr als 2 µm und nicht mehr als 1/3 des mittleren Teilchendurchmessers des Talkums, und anderen Rohmaterialien zur Herstellung von Cordierit, Hinzufügen eines organischen Bindemittels und eines Plastifiziermittels zu der Masse, Kneten der Masse, um diese zum Extrudieren zu plastifizieren, Extrudieren des Gemisches zur Bildung einer Honigwabenstruktur, Trocknen der extrudierten Honigwabenstruktur und Brennen der Honigwabenstruktur bei einer Temperatur von 1350–1440°C.

7. Verfahren nach Anspruch 6, wobei das Talkum eine mittlere Teilchengröße von nicht mehr als 5 µm hat.

8. Verfahren nach Anspruch 6 oder 7, wobei das Kaolin eine Teilchengrösse von nicht mehr als 1 µm hat.

9. Verfahren nach einem der Ansprüche 6 bis 8, wobei Aluminium und/oder Aluminiumhydroxid mit einem mittleren Teilchendurchmesser von nicht mehr als 2 µm in der Masse enthalten ist.

10. Verfahren nach Anspruch 9, wobei das Rohmaterial-Aluminium einen Na₂O Gehalt von nicht mehr als 0,12% hat.

11. Verfahren nach einem der Ansprüche 6 bis10, wobei das Kaolin durch Mahlen von gebranntem Kaolin in einer Naß-Kugelmühle zubereitet wird.

12. Verfahren nach einem der Ansprüche 6 bis 11, wobei hochreines amorphes Silizium in der Masse enthalten ist.

13. Verfahren nach Anspruch 12, wobei das hochreine Silizium in einer Menge von nicht mehr als 8% der Masse zugefügt wird.

**Revendications**

1. Support de catalyseur de cordiérite ayant une structure en nid d'abeilles qui a une composition chimique sur une base pondérale de 42–56% de SiO₂, 30–45% de Al₂O₃ et 12–16% de MgO comme composants principaux, des phases cristallines consistant principalement en cordiérite, une porosité ne dépassant pas 30%, un coefficient de dilatation thermique (CTE) ne dépassant pas $1,0 \times 10^{-6}$/°C dans la direction perpendiculaire aux passages d'écoulement de la structure en nid d'abeilles (axe B) dans la plage de

16

températures de 40–800°C, CTE ne dépassant pas $0,8 \times 10^{-6}$/°C dans la direction des passages d'écoulement de la structure en nid d'abeilles (axe A) dans la même plage de températures.

2. Support de catalyseur de cordiérite ayant une structure en nid d'abeilles tel que défini à la revendication 1, qui a une porosité ne dépassant pas 25%.

3. Support de catalyseur de cordiérite ayant une structure en nid d'abeilles tel que défini à la revendication 1 ou à la revendication 2, qui a une différence de CTE ne dépassant pas $0,2 \times 10^{-6}$/°C entre CTE suivant l'axe B et CTE suivant l'axe A.

4. Support de catalyseur de cordiérite ayant une structure en nid d'abeilles tel que défini selon l'une quelconque des revedications 1 à 3, qui a une résistance à la compression suivant l'axe A de pas moins de 200 kg/cm².

5. Support de catalyseur de cordiérite ayant une structure en nid d'abeilles tel que défini selon l'une quelconque des revendications 1 à 4, qui a une épaisseur de paroi de séparation ne dépassant pas 437 μm.

6. Méthode de préparation d'un support de catalyseur de cordiérite ayant une structure en nid d'abeilles selon la revendication 1, consistant à préparer un lot de talc très fin d'un diamètre moyen de particule ne dépassant pas 7 μm, du kaolin très fin d'un diamètre moyen de particule ne dépassant 2 μm et ne dépassant pas 1/3 du diamètre moyen de particule du talc et d'autres matières premières pour préparer la cordiérite, d'ajouter un liant organique et un plastifiant au lot, de malaxer le lot pour le plastifier pour l'extrusion, d'extruder le mélange pour former une structure en nid d'abeilles, de sécher la structure extrudée en nid d'abeilles et de cuire la structure en nid d'abeilles à température de 1350–1440°C.

7. Méthode selon la revendication 6, où le talc a un diamètre moyen de particule ne dépassant pas 5 μm.

8. Méthode selon l'une des revendications 6 ou 7, où le kaolin a un diamètre moyen de particule ne dépassant pas 1 μm.

9. Méthode selon l'une quelconque des revendications 6 à 8, où au moins l'un de l'alumine et de l'hydroxyde d'aluminium d'un diamètre moyen de particule ne dépassant pas 2 μm est incorporé dans le lot.

10. Méthode selon la revendication 9, où l'alumine comme matière première a une teneur en $Na_2O$ ne dépassant pas 0,12%.

11. Méthode selon l'une quelconque des revendications 6 à 10, où le kaolin est préparé en broyant du kaolin calciné dans un broyeur à billes du type humide.

12. Méthode selon l'une quelconque des revendications 6 à 11, où de la silice amorphe très pure est incorporée dans le lot.

13. Méthode selon la revendication 12, où la silice amorphe très pure est ajoutée au lot en une quantité ne dépassant pas 8%.

# FIG_1

# FIG_2

Cumulative Weight (%) vs Kaoline Particles Diameter (µm)

(A)  (B)  (C)  (D)  (E)

# FIG_3

Axis A

Axis B

B

# FIG_4

Compression Strength in Axis A of 200kg/cm²

Wall Thickness

76μm
102
127
152
178
203
254
305
381
437

Cell Numbers (/cm²)

140
109
93
62
47
31
8
3
2

Region of the Present Invention

15    20    25    30    35

Porosity (%)